# EUROPÄISCHE PATENTSCHRIFT

(11) **EP 2 176 573 B1**
(45) Veröffentlichungstag und Bekanntmachung des Hinweises auf die Patenterteilung: **18.04.2012**
(21) Anmeldenummer: 08734650.8
(22) Anmeldetag: 18.03.2008
(51) Int. Cl.: F16J 15/08, F02F 11/00

(54) **ZYLINDERKOPFDICHTUNG MIT EINZELNEN DICHTELEMENTEN**
CYLINDER HEAD SEAL HAVING INDIVIDUAL SEALING ELEMENTS
JOINT DE CULASSE AVEC DES ÉLÉMENTS D'ÉTANCHÉITÉ SÉPARÉS

(30) Priorität: 13.07.2007 DE 102007032785
(43) Veröffentlichungstag der Anmeldung: 21.04.2010
(73) Patentinhaber: Federal-Mogul Sealing Systems GmbH, 57562 Herdorf (DE)
(72) Erfinder: PREHN, Rolf, 51688 Wipperfürth (DE)
(74) Vertreter: Becker Kurig Straus
(86) Internationale Anmeldenummer: PCT/EP2008/002166
(87) Internationale Veröffentlichungsnummer: WO 2009/010109

(56) Entgegenhaltungen:
- WO-A2-2006/130446
- DE-A1- 10 324 978
- DE-A1-102004 040 784
- GB-A- 273 560
- US-A- 5 267 740

## Beschreibung

Die Erfindung betrifft eine Zylinderkopfdichtung für eine Verbrennungskraftmaschine, mit den wesentlichen Bestandteilen Zylinderkopf und Motorblock. Die Dichtung hat primär die Aufgabe, sowohl den bzw. die Brennräume als auch alle Bohrungen und Kanäle für Kühlflüssigkeiten oder Schmierstoffe optimal abzudichten.

Eine Zylinderkopfdichtung wird in einem Verbrennungsmotorsystem zwischen dem Motorblock und dem Zylinderkopf eingespannt. Ihre Hauptaufgabe ist die Abdichtung des Brennraums, der Öldurchgänge und der Kühlmittelbereiche. Außerdem dient sie als Kraftübertragungsglied zwischen Zylinderkopf und Zylinderblock. Dabei müssen im Betrieb des Motors auftretende Dichtspaltschwingungen elastisch ausgeglichen werden.

Derzeit werden als Zylinderkopfdichtungen zumeist metallische Dichtungen verwendet. Dabei ist diese Dichtung in der Regel einstückig bzw. integral und weist eine oder mehrere Lagen auf. Diese Lagen haben Aussparungen für die Brennräume, die Bohrungen und Kanäle, sowie unterschiedliche Prägungen, auch Sicken genannt. Mit Hilfe der Sicken werden die unterschiedlichen Dichtfunktionen realisiert.

Die verschiedenen Bereiche einer Zylinderkopfdichtung müssen ganz unterschiedlichen Anforderungen genügen. Beispielsweise benötigt eine Brennraumabdichtung wegen der hohen auftretenden Temperaturen und Druckunterschiede andere Eigenschaften, als eine Abdichtung für Kühlmittel- oder Schmierstoffzuleitungen.

Des Weiteren dient eine Zylinderkopfdichtung dazu, Bauteilunebenheiten auszugleichen und z. B. mittels Beschichtung an definierten Stellen eine Mikroabdichtung zu gewährleisten.

Die Herstellung einer Zylinderkopfdichtung erfolgt in einer Vielzahl von Fertigungsschritten. In großen Stanzanlagen, die mit Kräften von 3000 bis 5000 kN arbeiten, werden die Rohlinge ausgestanzt. Dabei werden eine oder mehrere Lagen (Feder-) Stahlblech aus einem großen Blech ausgeschnitten. Im weiteren Verlauf werden Sicken durch Umformung in das Stahlblech, die spätere Dichtung geprägt. In der weiteren Produktion werden die verschiedenen Lagen der mehrschichtigen Dichtungen per Hand aufeinandergelegt und im nächsten Schritt die Dichtungen von Robotern zusammengenietet.
Es sind aus der britischen Patentanmeldung GB 273560 (A) ist eine Dichtung bekannt, die einstückig aus einem Blech geformt ist und bei der Dichtstege mit einem dreieckigen Querschnitt von Verbindungsstegen zusammengehalten werden.

Aus der deutschen Patentanmeldung DE 103 24 978 A1 ist ein Verfahren zur Herstellung einer Flachdichtung, insbesondere einer Zylinderkopfdichtung für eine Verbrennungskraftmaschine, bekannt, indem aus mindestens einem metallischen Trägermaterial mindestens ein inneres und mindestens ein äußeres Metallteil mit vorgebbarer Kontur herausgetrennt werden, wobei die Konturen so ausgebildet werden, dass bei Ineinanderlegen der Metallteile zwischen selbigen ein Spalt gebildet wird und der Spalt zur Verbindung der Metallteile unter Bildung mindestens eines Dichtbereiches mit Elastomermaterial aufgefüllt wird.

Aus dem amerikanischen Patentdokument US 5267740 A ist eine Metall-Zylinderkopfdichtung bekannt, die eine Skelettplatte aus Metall umfasst, die mit Dichtringen an dem Verbrennungsraumöffnungen, und Elastomerdichtungen um Fluidöffnungen versehen ist.

Die deutsche Patentanmeldung DE 10 2004 040784 A1 betrifft eine Zylinderkopfdichtung aus Metall für einen Verbrennungsmotor mit mindestens einer Brennraumöffnung, wobei die Dichtung mindestens eine Metalllage umfasst, die aus mindestens zwei kombinierbaren Lagenteilen hergestellt ist.

Die internationale Patentanmeldung WO 2006130446 A2 offenbart einen Statikdichtungsaufbau mit einem gitterartigen Träger, der als einem Gewebe von überlappenden Strängen gebildet ist. Dabei werden Dichtelemente in Öffnungen in dem Gewebe eingesetzt und von dem Gewebe gehalten.

Aufgabe der vorliegenden Erfindung ist es daher, eine Zylinderkopfdichtung und deren Herstellungsverfahren bereitzustellen, die optimal an die Dichtungsaufgabe in dem jeweiligen Bereich der Zylinderkopfdichtung angepasst werden kann.

Die Aufgabe wird durch eine Zylinderkopfdichtung gemäß Anspruch 1 und ein Herstellungsverfahren gemäß Anspruch 16 oder 17 gelöst, bei der die gesamte Dichtfunktion in Einzelelemente und Einzelaufgaben aufgeteilt werden und diese Einzelaufgaben integriert werden können. Bevorzugte Ausführungsformen der Zylinderkopfdichtung sind in den abhängigen Ansprüchen beschrieben.

Gemäß einem ersten Aspekt der vorliegenden Erfindung wird eine Zylinderkopfdichtung zur Abdichtung von Bauteilen einer Verbrennungskraftmaschine bereitgestellt. Diese Zylinderkopfdichtung umfasst mindestens zwei Dichtelemente zur Aufteilung von Dichtfunktionen mit jeweils zumindest einer Öffnung und mindestens ein längliches, flexibles Halteelement, welches die mindestens zwei Dichtelemente einfasst, wobei das mindestens eine Halteelement jeweils an wenigstens einer Stelle oder einem Bereich mit den mindestens zwei Dichtelementen verbunden ist.

Grundlage der vorliegenden Erfindung ist die Aufteilung der einzelnen Dichtungsfunktionen in separate Dichtelemente und deren Integration durch ein Halteelement. Das bedeutet, es wird für das Abdichten eines jeden Brennraums eine separate Brennraumabdichtung verwendet und für das Abdichten der Kühlmedien und Schmierstoffe ebenfalls separate Dichtelemente verwendet. Das Halteelement kann entweder nur zum Halten eines einzigen Dichtelements konzipiert sein oder aber bei mehreren Dichtelementen als reines Halte- und Verbindungselement ausgestaltet sein. Es ist aber auch möglich, das Haltelement als Halteelement, Verbindungselement und/oder Stützkörper zu verwenden, um die Einbauhöhe zu definieren. Außerdem lässt sich das Halteelement selbst alleine oder zusätzlich auch als Halte-, Verbindungselement und/oder Dichtelement verwenden.

Diese Vorgehensweise ermöglicht es, sowohl das jeweils ideale Material als auch die jeweils ideale Form bzw. Geometrie für jede Dichtungsaufgabe nutzen zu können. Durch die Aufteilung der gesamten Dichtfunktion einer Zylinderkopfdichtung in Einzelelemente und Einzelaufgaben ergibt sich der Vorteil, dass die einzelnen Elemente aus individuellen, idealen Materialien und Geometrien anwendungs-optimiert hergestellt und eingesetzt werden können. Dadurch, dass einzelne Dichtelemente verwendet werden, ergeben sich große Kostenreduktionspotenziale und die Möglichkeit standardisierte Dichtelemente zu verwenden.

Außerdem können auch die Dichtelemente untereinander oder die Halteelemente untereinander anliegen bzw. verbunden sein. Um das Halteelement oder die Halteelemente und die einzelnen Dichtelemente miteinander zu verbinden, sind abhängig von dem Material des Dichtelements und dem Halteelement beispielsweise stoffschlüssige Verfahren, wie z.B. Schweißen, Löten oder Kleben möglich. Bei metallischen Dicht und Halteelementen wird z.B. Schweißen oder Löten bevorzugt werden, wohingegen bei Kunststoffmaterial z.B. Kleben die bessere Wahl ist, wenn das Gewicht der Zylinderkopfdichtung möglichst gering gehalten werden soll. Alternativ oder zusätzlich sind auch beispielsweise formschlüssige Verfahren, wie z.B. Quetschverbindungen oder Einhakmechanismen mit zwei Teilen, die ineinander einhaken, zur Verbindung von Dichtelement als auch der Dichtelemente untereinander oder der Halteelemente untereinander möglich, wenn z.B. die Temperaturverhältnisse stoffschlüssige Verbindungen nicht zulassen. Des Weiteren sind auch kraftschlüssige Verfahren, wie z.B. Schrauben oder Nieten einsetzbar, wodurch z.B. die Steifigkeit der Zylinderkopfdichtung erhöht werden kann. Die Haltefunktion kann z.B. auch durch straffes bzw. festes Spannen eines Halteelements um die zwei oder mehreren Dichtelemente, die dadurch aneinander gepresst werden oder durch Anbringen von Rillen erreicht werden. Dadurch kann z. B. die Steifigkeit und die Stabilität der Zylinderkopfdichtung individuell an die Gegebenheiten angepasst werden.

Mindestens ein Halteelement besteht aus einem metallischen Draht bzw. Draht. Dieser lässt sich im Allgemeinen gut bearbeiten und besitzt die nötige Steifigkeit, um die Dichtelemente oder auch die Zylinderkopfdichtung zusammenzuhalten und ihr die nötige Steifigkeit und Stabilität zu verleihen. Alternativ oder zusätzlich ist es jedoch auch möglich, dass mindestens ein Halteelement aus einer Polymerfaser besteht, die z.B. verstärkt oder unverstärkt sein kann. Die trägt weiter zu einer Gewichtsreduktion bei. Durch den Einsatz von Draht oder einer Polymerfaser wird der Materialeinsatz auf ein Minimum reduziert.

Die Geometrie des Drahtes unterliegt im Allgemeinen nur der Forderung, dass dieser entsprechend umgeformt bzw. in Form gebracht werden können muss. Vorzugsweise weist mindestens ein Halteelement zumindest an einer Stelle bzw. in einem Bereich einen runden und/oder ovalen Querschnitt auf. Dadurch kann ein standardisierter Draht verwendet werden und der Draht lässt sich gut verarbeiten. Alternativ oder zusätzlich kann mindestens ein Halteelement zumindest an einer Stelle bzw. in einem Bereich einen rechteckigen Querschnitt aufweisen. Dadurch ist die Auflagefläche des Halteelements auf dem Bauteil optimiert.

Zusätzlich oder alternativ weist mindestens ein Halteelement zumindest an einer Stelle einen abgeflachten Querschnitt auf. Dadurch kann der Draht so verlegt werden, dass er an bestimmten Stellen eine größere Auflagefläche bietet. Auf diese Weise können z. B. die im Umfeld von Schrauben auftretenden Spannungsspitzen großflächiger verteilt und dadurch Schraubenkräfte reduziert werden.

Außerdem kann mindestens eines der Halteelemente eine Erhöhung aufweisen. Dies kann durch eine bestimmte Form des Halteelements geschehen oder auch durch das Überkreuzen des Halteelements an bestimmten Stellen. Dadurch lassen sich punktuelle bzw. auch linienförmige oder flächige Erhöhungen realisieren, die dann als Distanzelemente oder Sogenannte Stopper genutzt werden können.

Mindestens ein Halteelement weist zumindest an einer Stelle eine zusätzliche Erweiterung auf. Zumindest eine dieser zusätzlichen Erweiterungen kann mindestens einen Bogen darstellen. Dabei wird das Halteelement z.B. derart an den einzelnen Dichtelementen vorbeigeführt werden, dass Bögen entstehen, die als Kompensationsbögen wirken, die z. B. sowohl unterschiedliche thermische Ausdehnungen oder auch Verzüge einzelner Bauteile (z.B. Block, Zylinderkopf, Zylinderlaufbüchsen) ausgleichen können.

Bevorzugt stellt mindestens eine der zusätzlichen Erweiterungen mindestens eine omega-förmige Bucht dar. Dabei wird das Halteelement so verlegt, dass Buchten entstehen, die die Form des griechischen Buchstaben Omega haben. Diese Buchten können dann z.B. in einem gleichzeitigen oder nachgeschalteten Spritzgieß- oder Beschichtungsprozess derart modifiziert werden, dass daraus eine Dichtkomponente, z.B. ein Dichtring oder Dichtellipse entsteht.

Mindestens ein Dichtelement kann z.B. eine metallische Brennraumabdichtung zur Abdichtung der Brennräume sein. Durch beispielsweise hohe Temperaturen und große Druckunterschiede sind an diese Abdichtung besondere Anforderungen gestellt.

Außerdem können ein oder mehrere Dichtelemente Abdichtung aus Elastomer sein. Im Allgemeinen werden für Medien, wie z.B. an den Bohrungen und Kanälen für Kühlflüssigkeiten oder Schmierstoffe bevorzugt Dichtelemente, wie Dichtringe aus Elastomer verwendet. Diese Dichtelemente sind hochelastisch und können selbst kleinste Materialunebenheiten ausgleichen.

Die Einstellung der Einbaudicke kann z.B. über die einzelnen Dichtelemente und/oder mittels der Halteelemente vorgenommen werden. Es ist jedoch auch möglich, zusätzlich oder alternativ separate Distanzelemente, wie z.B. Distanzringe bzw. Distanzhülsen oder Distanzellipsen anzuordnen. Vorzugsweise ist das mindestens eine Distanzelement derart angeordnet, dass es zumindest mit einem Dichtelement oder einem Halteelement verbunden ist. Um das mindestens eine Distanzelement und die einzelnen Dichtelemente bzw. Halteelement miteinander zu verbinden, sind sowohl stoffschlüssige Verfahren (z.B. Schweißen, Löten, Kleben), formschlüssige Verfahren (z. B. Quetschverbindungen, Einhakverbindungen) als auch kraftschlüssige Verfahren (z. B. Schrauben, Nieten, straffes Spannen) einsetzbar.

Gemäß einem weiteren Aspekt der vorliegenden Erfindung wird ein Verfahren zur Herstellung einer Zylinderkopfdichtung zur Abdichtung von Bauteilen einer Verbrennungskraftmaschine bereitgestellt. Das Verfahren umfasst folgende Schritte: die einzelnen Dichtelemente werden auf einer Haltevorrichtung fixiert und das Halteelement anschließend, beispielsweise mit einem Roboter, um die Dichtelemente herum geführt, so dass das Halteelement und die Dichtelemente an definierten Stellen bzw. Bereichen verbunden werden können.

Gemäß einem weiteren Aspekt der vorliegenden Erfindung ist alternativ oder zusätzlich auch die umgekehrte Vorgehensweise denkbar, die folgende Schritte umfasst: mindestens ein Halteelement wird entsprechend vorgeformt und anschließend werden die einzelnen Dichtelemente eingesetzt.

Im Anschluss daran können die mindestens zwei Dichtelemente, das mindestens eine Halteelement und/oder ein oder mehrere mögliche Distanzelemente miteinander verbunden werden. Dabei ist es möglich, mindestens ein Dichtelement mit mindestens einem Halteelement, mindestens ein Dichtelement mit mindestens einem weiteren Dichtelement und/oder mindestens ein Halteelement mit mindestens einem weiteren Halteelement gleichzeitig oder zu verschiedenen Zeitpunkten in beliebiger Reihenfolge miteinander zu verbinden.

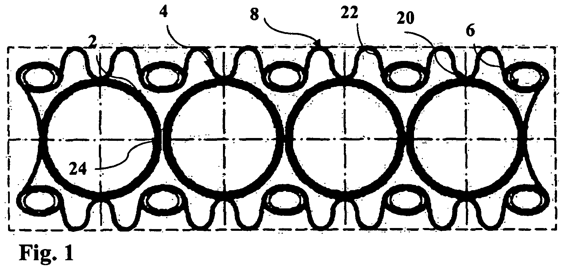

Weitere Vorteile und Merkmale der vorliegenden Erfindung werden aus der folgenden Beschreibung von Ausführungsformen der Erfindung ersichtlich, in der auf die angefügten Zeichnungen Bezug genommen wird, in denen
Fig. 1 eine bevorzugte Ausführungsform der vorliegenden Erfindung im Querschnitt mit Kompensationsbögen darstellt.

Figur 1 zeigt eine bevorzugte Ausführungsform der vorliegenden Erfindung. Die Dichtelemente 2 sind zur Brennraumabdichtung um die Brennraumöffnungen des Motors der Verbrennungskraftmaschine herum angeordnet und zusätzlich sind Dichtelemente 6 angeordnet, die Kühlmittel und/oder Schmierstoffzuleitungen umschließen. Diese Dichtelemente werden mit einem Halteelement 4 zusammengehalten, indem das Halteelement 4 mit den Dichtelementen 2 und den Dichtelementen 6 verbunden ist. Die Dichtelemente 2 können eventuell an den Stellen 24 miteinander verbunden sein. Dies ist auch bei den Dichtelementen 6 untereinander bzw. zwischen den Dichtelementen 2 und den Dichtelementen 2 und 6 möglich. Zusätzlich befinden sich in dem Halteelemente 4 zwischen der Stelle 22 bzw. dem Bereich an dem das Halteelement 4 mit dem Dichtelement 6 verbunden ist und der Stelle 20 bzw. dem Bereich an dem das Halteelement 4 mit dem Dichtelement 2 verbunden ist, ein Bogen bzw. ein sogenannter Kompensationsbogen, der z. B. sowohl unterschiedliche thermische Ausdehnungen oder auch Verzüge einzelner Bauteile ausgleichen kann.

Die omega-förmigen Buchten können an den Stoßkanten miteinander verbunden werden, um geschlossene Geometrien zu erhalten. Dabei sind sowohl Stoff-, kraft- oder auch formschlüssige Verbindungstechniken einsetzbar.

## Patentansprüche

1. Zylinderkopfdichtung zur Abdichtung von Bauteilen einer Verbrennungskraftmaschine, umfassend
mindestens zwei Dichtelemente (2, 6) mit unterschiedlichen Dichtfunktionen mit jeweils zumindest einer Öffnung; und
**dadurch gekennzeichnet, dass** die Zylinderkopfdichtung weiter umfasst:
mindestens ein längliches, flexibles Halteelement (4), welches die mindestens zwei Dichtelemente (2, 6) einfasst;
wobei das mindestens eine Halteelement (4) aus Draht gebildet ist oder aus einer Polymerfaser besteht;
wobei das mindestens eine Halteelement (4) an wenigstens jeweils einer Stelle (20, 22) mit den mindestens zwei Dichtelementen (2, 6) verbunden ist; und
wobei das mindestens eine Halteelement (4) zumindest in einem Bereich zwischen Verbindungsstellen (20, 22) mit den mindestens zwei Dichtelementen (2, 6) eine zusätzliche Erweiterung aufweist, die mindestens einen Kompensationsbogen (8) zum Ausgleich unterschiedlicher thermischer Ausdehnungen oder Verzüge darstellt.

2. Zylinderkopfdichtung nach Anspruch 1, wobei mindestens eines der Dichtelemente (2, 6) mit mindestens einem weiteren Dichtelement (2, 6) an wenigstens einer Stelle (24) verbunden ist.

3. Zylinderkopfdichtung nach einem der vorhergehenden Ansprüche, wobei mindestens eines der Halteelemente (4) mit mindestens einem weiteren Halteelement (4) an wenigstens einer Stelle verbunden ist.

4. Zylinderkopfdichtung nach einem der vorhergehenden Ansprüche, wobei mindestens eine Verbindung durch ein stoffschlüssiges Verfahren geschaffen ist.

5. Zylinderkopfdichtung nach einem der vorhergehenden Ansprüche, wobei mindestens eine Verbindung durch ein formschlüssiges Verfahren geschaffen ist.

6. Zylinderkopfdichtung nach einem der vorhergehenden Ansprüche, wobei mindestens eine Verbindung durch ein kraftschlüssiges Verfahren geschaffen ist.

7. Zylinderkopfdichtung nach einem der vorhergehenden Ansprüche, wobei das mindestens eine Halteelement (4) zumindest teilweise einen runden Querschnitt aufweist, zumindest in einem Bereich einen ovalen oder rechteckigen Querschnitt aufweist.

8. Zylinderkopfdichtung nach einem der vorhergehenden Ansprüche, wobei das mindestens eine Halteelement (4) in einem Bereich eine Erhöhung aufweist.

9. Zylinderkopfdichtung nach einem der vorhergehenden Ansprüche, umfassend mindestens eine zusätzliche Erweiterung, die mindestens eine omega-förmige Bucht (10, 12) darstellt.

10. Zylinderkopfdichtung nach Anspruch 9, wobei die mindestens eine zusätzliche Erweiterung mit mindestens einer Dichtkomponente (14, 16) versehen ist.

11. Zylinderkopfdichtung nach Anspruch 10, wobei mindestens eine Dichtkomponente (14, 16) spritzgegossen ist.

12. Zylinderkopfdichtung nach Anspruch 10 oder 11, wobei mindestens eine Dichtkomponente (14, 16) durch Beschichtung entsteht.

13. Zylinderkopfdichtung nach einem der vorhergehenden Ansprüche, wobei mindestens ein Dichtelement (2) eine metallische Brennraumabdichtung ist.

14. Zylinderkopfdichtung nach einem der vorhergehenden Ansprüche, wobei mindestens ein Dichtelement (6) eine Abdichtung aus Elastomeren ist.

15. Zylinderkopfdichtung nach einem der vorhergehenden Ansprüche, wobei zusätzlich mindestens ein Distanzelement zwischen benachbarten Dichtelementen angeordnet ist.

16. Verfahren zur Herstellung einer Zylinderkopfdichtung zur Abdichtung von Bauteilen einer Verbrennungskraftmaschine, umfassend folgende Schritte:
- Fixieren von mindestens zwei Dichtelementen (2, 6) auf einer Haltevorrichtung; und
- Herumführen mindestens eines länglichen, flexiblen Halteelements (4), wobei das mindestens eine Halteelement (4) aus Draht gebildet ist oder aus einer Polymerfaser besteht, um mindestens zwei Dichtelemente (2, 6), so dass das mindestens eine Halteelement (4) an jeweils wenigstens einer Stelle (20, 22) mit den mindestens zwei Dichtelementen (2, 6) verbunden ist, und so dass das mindestens eine Halteelement (4) zumindest in einem Bereich zwischen Verbindungsstellen (20, 22) mit den mindestens zwei Dichtelementen (2, 6) eine zusätzliche Erweiterung aufweist, die mindestens einen Kompensationsbogen (8) zum Ausgleich unterschiedlicher thermischer Ausdehnungen oder Verzüge darstellt.

17. Verfahren zur Herstellung einer Zylinderkopfdichtung zur Abdichtung von Bauteilen einer Verbrennungskraftmaschine, umfassend folgende Schritte:
- Vorformen mindestens eines länglichen, flexiblen Halteelements (4), wobei das mindestens eine Halteelement (4) aus Draht gebildet ist oder aus einer Polymerfaser besteht; und
- Einsetzen von mindesten zwei Dichtelementen (2, 6) in das mindestens eine vorgeformte Halteelement (4), so dass das mindestens eine Halteelement (4) an jeweils wenigstens einer Stelle (20, 22) mit den mindestens zwei Dichtelementen (2, 6) verbunden ist, und so dass das mindestens eine Halteelement (4) zumindest in einem Bereich zwischen Verbindungsstellen (20, 22) mit den mindestens zwei Dichtelementen (2, 6) eine zusätzliche Erweiterung aufweist, die mindestens einen Kompensationsbogen (8) zum Ausgleich unterschiedlicher thermischer Ausdehnungen oder Verzüge darstellt.

## Claims

1. Cylinder head gasket for sealing parts of an internal combustion engine, comprising at least two sealing elements (2, 6) with different sealing functions, each with at least one opening; and
**characterized in that** the cylinder head gasket further comprises:
at least one elongated, flexible retaining element (4) which surrounds the at least two sealing elements (2, 6);
wherein the at least one retaining element (4) is formed from wire or consists of a polymer fibre;
wherein the at least one retaining element (4) is connected with the at least two sealing elements (2, 6) on at least one respective location (20, 22); and
wherein the at least one retaining element (4) comprises, at least in an area between connection locations (20, 22) with the at least two sealing elements (2, 6), an additional extension constituting at least one compensation arch (8) for compensation of different thermal expansions or distortions.

2. Cylinder head gasket according to claim 1, wherein at least one of the sealing elements (2, 6) is connected to at least one other sealing element (2, 6) on at least one location (24).

3. Cylinder head gasket according to one of the preceding claims, wherein at least one of the retaining elements (4) is connected with at least one other retaining element (4) on at least one location.

4. Cylinder head gasket according to one of the preceding claims, wherein at least one connection is created by a material-bond method.

5. Cylinder head gasket according to one of the preceding claims, wherein at least one connection is created by a form-fit method.

6. Cylinder head gasket according to one of the preceding claims, wherein at least one connection is created by a force-fit method.

7. Cylinder head gasket according to one of the preceding claims, wherein the at least one retaining element (4) has an at least partly round cross-section, at least in an area an oval or rectangular cross-section.

8. Cylinder head gasket according to one of the preceding claims, wherein the at least one retaining element (4) has an elevation in one area.

9. Cylinder head gasket according to one of the preceding claims, comprising at least one additional extension constituting at least one omega-shaped bay (10, 12).

10. Cylinder head gasket according to claim 9, wherein the at least one additional extension is provided with at least one sealing component (14, 16).

11. Cylinder head gasket according to claim 10, wherein at least one sealing component (14, 16) is injection-moulded.

12. Cylinder head gasket according to claim 10 or 11, wherein at least one sealing component (14, 16) is results from coating.

13. Cylinder head gasket according to one of the preceding claims, wherein at least one sealing element (2) is a metallic combustion chamber seal.

14. Cylinder head gasket according to one of the preceding claims, wherein at least one sealing element (6) is a seal of elastomers.

15. Cylinder head gasket according to one of the preceding claims, wherein additionally at least one spacer element is arranged between neighbouring sealing elements.

16. Method for producing a cylinder head gasket for sealing parts of an internal combustion engine, comprising the following steps:
- securing at least two sealing elements (2, 6) on a retaining device; and
- passing at least one elongated, flexible retaining element (4) around at least two sealing elements (2, 6) such that the at least one retaining element (4) is connected with the at least two sealing elements (2, 6) on at least one respective location (20, 22), and such that the at least one retaining element (4) comprises, at least in an area between connection locations (20, 22) with the at least two sealing elements (2, 6), an additional extension constituting at least one compensation arch (8) for compensation of different thermal expansions or distortions, wherein the at least one retaining element (4) is formed from wire or consists of a polymer fibre.

17. Method for producing a cylinder head gasket for sealing parts of an internal combustion engine, comprising the following steps:
- pre-forming at least one elongated, flexible retaining element (4), wherein the at least one retaining element (4) is formed from wire or consists of a polymer fibre; and
- inserting at least two sealing elements (2, 6) into the at least one pre-formed retaining element (4), such that the at least one retaining element (4) is connected with the at least two sealing elements (2, 6) on at least one respective location (20, 22), and such that the at least one retaining element (4) comprises, at least in an area between connection locations (20, 22) with the at least two sealing elements (2, 6), an additional extension constituting at least one compensation arch (8) for compensation of different thermal expansions or distortions.

## Revendications

1. Joint d'étanchéité de tête de cylindre pour étanchéifier des composants d'un moteur à combustion interne, comprenant :
au moins deux éléments d'étanchéité (2,6) avec des fonctions d'étanchéité différentes comportant respectivement au moins une ouverture ; et
**caractérisé en ce que** le joint d'étanchéité de tête de cylindre comprend en outre :
au moins un élément de retenue (4) flexible, allongé, qui encercle les au moins deux éléments d'étanchéité (2, 6) ;
dans lequel le au moins un élément de retenue (4) est constitué de fil ou d'une autre fibre polymère ;
dans lequel le au moins un élément de retenue (4) est relié sur au moins respectivement un emplacement (20,22) avec les au moins deux éléments d'étanchéité (2, 6) ; et
dans lequel le au moins un élément de retenue (4) présente au moins dans une région entre les emplacements de liaison (20,22) avec les au moins deux éléments d'étanchéité (2,6) un élargissement supplémentaire, qui constitue au moins un arc de compensation (8) pour compenser des dilatations ou gauchissements thermiques différents.

2. Joint d'étanchéité de tête de cylindre selon la revendication 1, dans lequel au moins un des éléments d'étanchéité (2,6) est relié avec au moins un élément d'étanchéité supplémentaire (2,6) sur au moins un emplacement (24).

3. Joint d'étanchéité de tête de cylindre selon une des revendications précédentes, dans lequel au moins un des éléments de retenue (4) est relié avec au moins un élément de retenue (4) supplémentaire sur au moins un emplacement.

4. Joint d'étanchéité de tête de cylindre selon une des revendications précédentes, dans lequel au moins une liaison est réalisée selon un procédé par conjonction de matière.

5. Joint d'étanchéité de tête de cylindre selon une des revendications précédentes, dans lequel au moins une liaison est réalisée selon un procédé par conjonction de forme.

6. Joint d'étanchéité de tête de cylindre selon une des revendications précédentes, dans lequel au moins une liaison est réalisée selon un procédé par conjonction de forme.

7. Joint d'étanchéité de tête de cylindre selon une des revendications précédentes, dans lequel le au moins un élément de retenue (4) présente au moins partiellement une section transversale ronde, au moins dans une région une section transversale ovale ou rectangulaire.

8. Joint d'étanchéité de tête de cylindre selon une des revendications précédentes, dans lequel le au moins un élément de retenue (4) présente une surélévation dans une région.

9. Joint d'étanchéité de tête de cylindre selon une des revendications précédentes, comprenant au moins un élargissement supplémentaire, qui constitue au moins une anse (10,12) en forme d'oméga.

10. Joint d'étanchéité de tête de cylindre selon la revendication 9, dans lequel le au moins un élargissement supplémentaire est pourvu d'au moins un composant d'étanchéité (14,16).

11. Joint d'étanchéité de tête de cylindre selon la revendication 10, dans lequel au moins un composant d'étanchéité (15,16) est moulé par injection.

12. Joint d'étanchéité de tête de cylindre selon la revendication 10 ou 11, dans lequel au moins un composant d'étanchéité (14,16) est produit par revêtement.

13. Joint d'étanchéité de tête de cylindre selon une des revendications précédentes, dans lequel au moins un élément d'étanchéité (2) est une isolation métallique de chambre de combustion.

14. Joint d'étanchéité de tête de cylindre selon une des revendications précédentes, dans lequel au moins un élément d'étanchéité (6) est une isolation constituée d'élastomères.

15. Joint d'étanchéité de tête de cylindre selon une des revendications précédentes, dans lequel en outre au moins un élément d'écartement est disposé entre des éléments d'étanchéité voisins.

16. Procédé de fabrication d'un joint d'étanchéité de tête de cylindre pour étanchéifier des composants d'un moteur à combustion interne, comprenant les étapes suivantes consistant à :
- fixer au moins deux éléments d'étanchéité (2,6) sur un dispositif de retenue ; et
- placer au moins un élément de retenue (4) flexible, allongé, dans lequel le au moins un élément de retenue (4) est constitué de fil ou d'une autre fibre polymère, autour d'au moins deux éléments d'étanchéité (2,6), de sorte que le au moins un élément de retenue (4) soit relié sur au moins un élément respectif (20,22) avec les au moins deux éléments d'étanchéité (2,6), et de sorte que le au moins un élément de retenue (4) présente au moins dans une région entre des emplacements de liaison (20,22)avec les au moins deux éléments d'étanchéité (2,6) un élargissement supplémentaire, qui constitue au moins un arc de compensation (8) pour compenser des dilatations ou des gauchissements thermiques différents.

17. Procédé de fabrication d'un joint d'étanchéité de tête de cylindre pour étanchéifier des composants d'un moteur à combustion interne, comprenant les étapes suivantes :
- préformer au moins un élément de retenue flexible, allongé (4), dans lequel le au moins un élément de retenue (4) est constitué de fil ou d'une autre fibre polymère ; et
- emmancher au moins deux éléments d'étanchéité (2,6) dans au moins un élément de retenue préformé (4), de sorte que au moins un élément de retenue (4) soit relié sur au moins respectivement un emplacement (20,22) avec les au moins deux éléments d'étanchéité (2,6), et de sorte que au moins un élément de retenue (4) présente au moins dans une zone entre des emplacements de liaison (20,22) avec les au moins deux éléments d'étanchéité (2,6) un élargissement supplémentaire, qui compense un arc de compensation (8) pour compenser des dilatations ou gauchissements thermiques différentes.
